(19) Europäisches Patentamt
European Patent Office
Office européen des brevets

(11) Veröffentlichungsnummer: **0 392 251 B1**

(12) **EUROPÄISCHE PATENTSCHRIFT**

(45) Veröffentlichungstag der Patentschrift: **23.03.94**

(51) Int. Cl.$^5$: **C08G 63/64**

(21) Anmeldenummer: **90105750.5**

(22) Anmeldetag: **27.03.90**

# (54) Blockcopolymere.

(30) Priorität: **08.04.89 DE 3911557**

(43) Veröffentlichungstag der Anmeldung:
**17.10.90 Patentblatt 90/42**

(45) Bekanntmachung des Hinweises auf die Patenterteilung:
**23.03.94 Patentblatt 94/12**

(84) Benannte Vertragsstaaten:
**DE FR GB IT**

(56) Entgegenhaltungen:
**EP-A- 0 255 941**
**DE-A- 3 700 193**

(73) Patentinhaber: **BAYER AG**

**D-51368 Leverkusen(DE)**

(72) Erfinder: **Leitz, Edgar, Dr.**
**Goethestrasse 63**
**D-4047 Dormagen 1(DE)**
Erfinder: **Eichenauer, Herbert, Dr,**
**Gustav-Heinemann-Strasse 3**
**D-4047 Dormagen 1(DE)**
Erfinder: **Ott, Karl-Heinz, Dr.**
**Paul-Klee-Strasse 54**
**D-5090 Leverkusen 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Gegenstand der Erfindung sind Blockcopolymere aus Blöcken aus aliphatischen Carbonaten und Blöcken aus aliphatischen Lactonen oder Blöcken aus aliphatischen Carbonaten und Lactonen und ein Verfahren zu ihrer Herstellung. Die Blockcopolymeren entsprechen der Formel (I)

A - B - A (I)

worin
A ein Polymerisat aus aliphatischen Carbonaten und
B ein Polymerisat aus aliphatischen Estern darstellt.

Diese Blockcopolymeren sind alterungsbeständige Chemiewerkstoffe mit besonders guter Festigkeit und Dehnbarkeit sowie hoher Wärmeformbeständigkeit.

Sequenziert aufgebaute Copolymere, die Sequenzen aus cyclischen aliphatischen Carbonaten und Estern enthalten sowie ein Verfahren zu ihrer Herstellung sind bekannt und in der DE-OS 3 700 193 beschrieben.

Diese Copolymeren entsprechen der idealisierten Formel (II)

$(A - X - B)_r$ (II)

mit r = 1 bis 20
A = Polymerisat eines cyclischen aliphatischen Carbonats
B = Polymerisat eines cyclischen Lactons und
X = Polymerisat enthaltend sowohl das cyclische aliphatische Carbonat als auch das cylische Lacton in polymerisierter Form, wobei die Konzentration des Carbonats in Richtung auf B und die Konzentration des Lactons in Richtung auf A kontinuierlich abnehmen ("tapered structure").

Diese Copolymeren können durch portionsweise (r = Anzahl der Portionen) ringöffnende Polymerisation von Mischungen aus cyclischen Carbonaten und cyclischen Lactonen in aprotischen Lösungsmitteln bei niedrigen Temperaturen hergestellt werden.

Ihre Eigenschaften sind abhängig vom verwendeten Monomerverhältnis und können von kristallin spröde bis amorph kautschukelastisch reichen.

Diese Polymeren besitzen an dem einen Polymerkettenende ein Polymerisat eines cyclischen Carbonats und an dem anderen ein Polymerisat eines Lactons.

Die erfindungsgemäßen Blockcopolymeren der Formel (I) weisen an beiden Polymerkettenenden Polymerisate eines cyclischen Carbonats auf.

Die erfindungsgemäßen Blockcopolymeren der Formel (I) sind wie folgt aufgebaut:

Aufbau des Blockes A:

Der Block A ist ein Polymer von cyclischen aliphatischen Carbonaten der Formel (III)

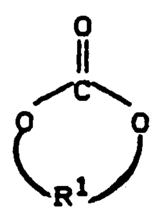

(III)

und/oder der Formel (IV)

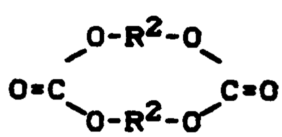

(IV)

Aufbau des Blockes B:

Der Block B ist insbesondere
ein Polymer von aliphatischen Lactonen der Formel (V)

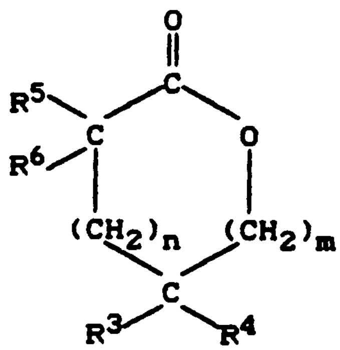

(V)

In den Formeln haben die allgemeinen Reste folgende Bedeutung:

$R^1$ in Formel (III)

a) $-CH_2CH_2CH(CH_3)-$,

b) $-CH_2CH_2OCH_2CH_2OCH_2CH_2-$,

c) $-CH_2CH(CH_3)CH_2CH_2C(CH_3)_2CH_2-$,

d)

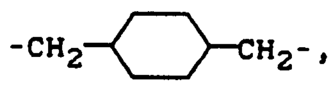

e)

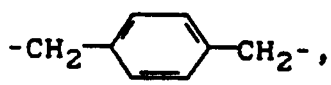

f)

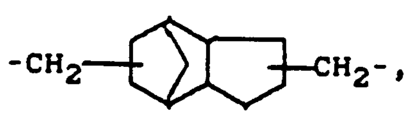

g)

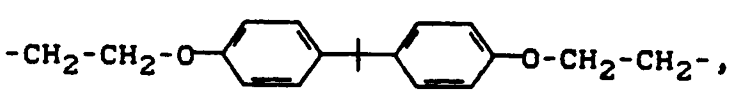

h)

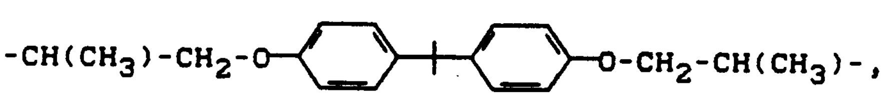

i)

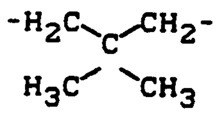

j)

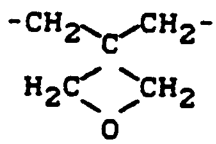

k)

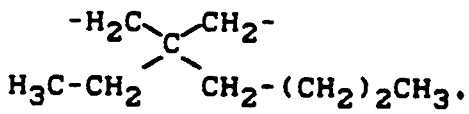

$R^2$ in Formel (IV) ist ein lineares $C_4$-$C_{12}$-Alkylen oder ein Rest der Formeln m) oder b)

m) $-CH_2-CH_2-O-CH_2-CH_2-$ oder

b) $-CH_2-CH_2-O-CH_2-CH_2-O-CH_2-CH_2-$,

$R^3$, $R^4$, $R^5$ und $R^6$ in Formel (V) sind gleich oder verschieden und H, $C_1$-$C_6$-Alkyl, $C_3$-$C_6$-Alkylen, $C_1$-$C_6$-Alkoxy und $C_2$-$C_6$-Alkylenoxy-$C_1$-$C_6$-alkyl, vorzugsweise H, $CH_3$ und $C_2H_5$; m und n in Formel (V) sind unabhängig voneinander 0, 1, 2, 3, 4, 5 oder 6.

Besonders bevorzugtes cyclisches aliphatisches Carbonat der Formel (III) ist Neopentylglykolcarbonat.

Besonders bevorzugtes Lacton der Formel (V) ist $\epsilon$-Caprolacton.

Die mittleren Molekulargewichte ($\overline{M}_w$) (Gewichtsmittel) der Blöcke A und B in der Formel (I) können gleich oder verschieden sein. Die mittleren Molekulargewichte ($\overline{M}_w$) für A sind 2.000 bis 500.000 g/Mol, vorzugsweise 5.000 bis 250.000 g/Mol, für B 2.000 bis 500.000 g/Mol, vorzugsweise 5.000 bis 250.000 g/Mol.

Die Copolymeren enthalten die Blöcke A und B jeweils in Mengen von 10 bis 90 Gew.-% (bezogen auf Gesamtmenge A + B), vorzugsweise in Mengen von 20 bis 80 Gew.-% (bezogen auf Gesamtmenge A + B).

Weiterer Gegenstand der Erfindung ist ein Verfahren zur Herstellung von Blockcopolymeren der Formel (I),

A - B - A (I)

in dem man in einer ersten Stufe ein cyclisches aliphatisches Carbonat der Formel (III) und/oder (IV) in einem aprotischen organischen Lösungsmittel mit einer alkalimetallorganischen Verbindung bei Temperaturen von +50 °C bis -78 °C, vorzugsweise +20 °C bis -30 °C bei einem Monomer/Lösungsmittel-Gewichtsverhältnis von 5 bis 35:100, vorzugsweise 10 bis 25:100, polymerisiert (Aufbau des A-Blocks), in einer zweiten Stufe zu der polymerisationsaktiven Lösung ein aliphatisches Lacton der Formel (V) in einem aprotischen organischen Lösungsmittel gibt und weiter polymerisiert, in einer dritten Stufe zu der polymerisationsaktiven Lösung ein cyclisches aliphatisches Carbonat der Formel (III) und/oder (IV) in einem aprotischen organischen Lösungsmittel gibt und weiter polymerisiert und anschließend die polymerisationsaktiven Zentren desaktiviert.

Die in der zweiten und dritten Stufe einzuhaltenden Polymerisationsbedingungen (Monomerkonzentration, Temperatur) entsprechen denen der ersten Stufe.

Die Copolymerisation von cyclischen aliphatischen Carbonaten der Formeln (III) und/oder (IV) mit aliphatischen Lactonen der Formel (V) unter Bildung eines Copolymeren der Formel (I) wird als "lebende" anionische Polymerisation in Gegenwart von aprotischen organischen Lösungsmitteln unter Verwendung von alkalimetallorganischen Verbindungen als Initiatoren und unter inerter Atmosphäre (Luft- und Feuchtigkeitsausschuß) durchgeführt.

Initiatoren sind Arylalkalimetall- und Alkylalkalimetallverbindungen sowie Alkoholate der Alkalimetalle.

Bevorzugte Initiatoren sind:

n-Butyllithium, s-Butyllithium, Phenyllithium, Cumylkalium, Naphthalinkalium, Naphthalinnatrium, Kalium-tert.-butylat.

Besonders bevorzugt sind n-Butyl- und s-Butyllithium.

Als aprotische organische Lösungsmittel finden cyclische Ether oder aromatische oder aliphatische Kohlenwasserstoffe oder Mischungen aus cyclischen Ethern und aromatischen oder aliphatischen Kohlenwasserstoffen Verwendung. Bevorzugte Lösungsmittel Tetrahydrofuran, Tetrahydropyran, Dioxan, Toluol und Benzol.

Besonders bevorzugt sind Toluol und Tetrahydrofuran.

Nach der Polymerisation werden die polymerisationsaktiven Zentren desaktiviert. Als Desaktivatoren werden protische Verbindungen, wie z.B. Wasser, Alkohole, Säuren oder Mischungen daraus eingesetzt. Bevorzugte Desaktivatoren sind Mischungen aus Methanol/Salzsäure und Methanol/Phosphorsäure.

Die Copolymeren lassen sich in bekannter Weise isolieren, z.B. durch Ausfällen mit Alkoholen, Filtrieren und anschließendes Trocknen oder durch direktes Eindampfen der Copolymerlösung mit Ausdampfaggregaten, wie Schneckenextrudern oder Dünnschichtverdampfern.

Die Copolymeren lassen sich z.B. durch Spritzguß-, Kalandrier-, Extrudier- oder Slush-Moulding-Verfahren bei Temperaturen von ca. 120 °C bis 200 °C verarbeiten.

Die Copolymerisate lassen sich in bekannter Weise stabilisieren, pigmentieren und mit üblichen Additiven antistatisch und/oder flammfest ausrüsten oder mit Füllstoffen füllen.

Aus den Copolymeren können Formkörper jeder Art hergestellt werden, z.B. Taucherbrillen, Schwimmflossen, Turnschuhsohlen, Fensterdichtungen, Faltenbeläge, Folien, Griffe und Beschichtungen.

## Beispiele

I. Blockcopolymere vom Typ A - B - A mit A = Polyneopentylglykolcarbonat (PNPC) und B = Poly-$\epsilon$-Caprolacton (PECL)

### Beispiel 1

Herstellung eines Blockcopolymeren mit einem Monomer-Gewichtsverhältnis von 40 Gew.-% Neopentylglykolcarbonat (NPC) (A-Block) : 20 Gew.-%. $\epsilon$-Caprolacton (ECL) (B-Block) : 40 Gew.-% Neopentylglykolcarbonat (NPC) (A-Block)
(Brutto-Monomer-Gewichtsverhältnis NPC : ECL = 80 : 20).

Zu einer Lösung von 400 g NPC in 2.680 ml Toluol wurden bei 15 °C 13 ml n-Butyllithium-Lösung (2.5 molar in Cyclohexan) gegeben. Während einer Polymerisationszeit von 25 min wurde eine maximale Temperatur von 21 °C erreicht (Aufbau des A-Blocks). Dann wurde bei 16 °C eine Lösung von 200 g ECL in 1.340 ml Toluol zugesetzt. Die Temperatur der Lösung stieg während der Polymerisationszeit von 15 min auf 21 °C (Aufbau des B-Blocks). Zum Aufbau des zweiten A-Blocks wurden weitere 400 g NPC gelöst in 2.680 ml Toluol bei 18 °C zugegeben, wobei die Temperatur während einer Polymerisationszeit von 25 min 21 °C erreichte. Anschließend wurde das Reaktionsgemisch mit 100 ml einer Mischung aus 1 molarer Phosphorsäure/Methanol (1:1 Vol.-%) desaktiviert und das Copolymere durch Fällung in Methanol, Filtration und Trocknung isoliert.

Copolymerausbeute: 950 g (95 %)
rel. Viskosität $\eta_{rel}$: 2.4 (20 °C, 2 gew.-%ige Lösung in Methylenchlorid)
Die anwendungstechnischen Daten sind in der Tabelle zusammengefaßt.

### Beispiel 2

Herstellung eines Blockcopolymeren mit einem Monomer-Gewichtsverhältnis von 30 Gew.-% NPC (A-Block) : 40 Gew.-% ECL (B-Block) : 30 Gew.-% NPC (A-Block)
(Brutto-Monomer-Gewichtsverhältnis NPC : ECL = 60 : 40).

Zu einer Lösung von 300 g NPC in 2.010 ml Toluol wurden bei 15 °C 13 ml n-Butyllithium-Lösung (2.5 molar in Cyclohexan) gegeben. Während einer Polymerisationszeit von 20 min wurde eine maximale Temperatur von 23 °C erreicht (Aufbau des A-Blocks). Dann wurde bei 16 °C eine Lösung von 400 g ECL in

2.680 ml Toluol zugesetzt. Die Temperatur der Lösung stieg während der Polymerisationszeit von 20 min auf 20 °C (Aufbau des B-Blocks). Zum Aufbau des zweiten A-Blocks wurden weitere 300 g NPC gelöst in 2.010 ml Toluol bei 18 °C zugegeben, wobei die Temperatur während einer Polymerisationszeit von 20 min 21 °C erreichte. Anschließend wurde das Reaktionsgemisch mit 100 ml einer Mischung aus 1 molarer Phosphorsäure/Methanol (1:1 Vol.-%) desaktiviert und das Copolymere durch Fällung in Methanol, Filtration und Trocknung isoliert.

Copolymerausbeute: 945 g (94,5 %)
rel. Viskosität $\eta_{rel}$: 2.8 (20 °C, 2 gew.-%ige Lösung in Methylenchlorid)

Die anwendungstechnischen Daten sind in der Tabelle zusammengefaßt.

Beispiel 3

Herstellung eines Blockcopolymeren mit einem Monomer-Gewichtsverhältnis von 20 Gew.-% NPC (A-Block) : 60 Gew.-% ECL (B-Block) : 20 Gew.-% NPC (A-Block)
(Brutto-Monomer-Gewichtsverhältnis NPC : ECL = 40 : 60).

Zu einer Lösung von 200 g NPC in 1.670 ml Toluol wurden bei 15 °C 13 ml n-Butyllithium-Lösung (2.5 molar in Cyclohexan) gegeben. Während einer Polymerisationszeit von 15 min wurde eine maximale Temperatur von 22 °C erreicht (Aufbau des A-Blocks). Dann wurde bei 16 °C eine Lösung von 600 g ECL in 4.020 ml Toluol zugesetzt. Die Temperatur der Lösung stieg während der Polymerisationszeit von 35 min auf 24 °C (Aufbau des B-Blocks). Zum Aufbau des zweiten A-Blocks wurden weitere 200 g NPC gelöst in 1.670 ml Toluol bei 17 °C zugegeben, wobei die Temperatur während einer Polymerisationszeit von 15 min 19 °C erreichte. Anschließend wurde das Reaktionsgemisch mit 100 ml einer Mischung aus 1 molarer Phosphorsäure/Methanol (1:1 Vol.-%) desaktiviert und das Copolymere durch Fällung in Methanol, Filtration und Trocknung isoliert.

Copolymerausbeute: 905 g (90,5 %)
rel. Viskosität $\eta_{rel}$: 3.4 (20 °C, 2 gew.-%ige Lösung in Methylenchlorid)

Die anwendungstechnischen Daten sind in der Tabelle zusammengefaßt.

Beispiel 4

Herstellung eines Blockcopolymeren mit einem Monomer-Gewichtsverhältnis von 10 Gew.-% NPC (A-Block) : 80 Gew.-% ECL (B-Block) : 10 Gew.-% NPC (A-Block)
(Brutto-Monomer-Gewichtsverhältnis NPC : ECL = 20 : 60).

Zu einer Lösung von 100 g NPC in 670 ml Toluol wurden bei 15 °C 13 ml n-Butyllithium-Lösung (2.5 molar in Cyclohexan) gegeben. Während einer Polymerisationszeit von 10 min wurde eine maximale Temperatur von 23 °C erreicht (Aufbau des A-Blocks). Dann wurde bei 16 °C eine Lösung von 800 g ECL in 5.360 ml Toluol zugesetzt. Die Temperatur der Lösung stieg während der Polymerisationszeit von 45 min auf 28 °C (Aufbau des B-Blocks). Zum Aufbau des zweiten A-Blocks wurden weitere 100 g NPC gelöst in 670 ml Toluol bei 17 °C zugegeben. Nach 10 min wurde das Reaktionsgemisch mit 100 ml einer Mischung aus 1 molarer Phosphorsäure/Methanol (1:1 Vol.-%) desaktiviert und das Copolymere durch Fällung in Methanol, Filtration und Trocknung isoliert.

Copolymerausbeute: 890 g (89 %)
rel. Viskosität $\eta_{rel}$: 4.3 (20 °C, 2 gew.-%ige Lösung in Methylenchlorid)

Die anwendungstechnischen Daten sind in der Tabelle zusammengefaßt.

II. Vergleichsbeispiele

Copolymere vom Typ A - X - B mit A = Polyneopentylglykolcarbonat (PNPC), B = Poly-ϵ-caprolacton und X = getapertes Übergangssegment aus Neopentylglykolcarbonat (NPC) und ϵ-Caprolacton

Vergleichsbeispiel 5

Herstellung eines Copolymeren vom Typ A - X - B mit einem Monomer-Gewichtsverhältnis NPC : ECL = 90 : 10

Zu einer Lösung von 1.620 g NPC und 180 g ECL in 10.000 ml Toluol wurden bei 15°C 15 ml n-Butyllithium-Lösung (2.5 molar in Cyclohexan) gegeben. Während einer Polymerisationszeit von 60 min wurde eine maximale Temperatur von 26°C erreicht. Das Reaktionsgemisch wurde dann mit 100 ml einer Mischung aus 1 molarer Phosphorsäure/Methanol (1:1 Vol.-%) desaktiviert und das Copolymere durch Fällung in Methanol, Filtration und Trocknung isoliert.

Copolymerausbeute: 1.690 g (94 %)
rel. Viskosität $\eta_{rel}$: 4.1 (20°C, 2 gew.-%ige Lösung in Methylenchlorid)

Die anwendungstechnischen Daten sind in der Tabelle zusammengefaßt.

Vergleichsbeispiel 6

Herstellung eines Copolymeren vom Typ A - X - B mit einem Monomer-Gewichtsverhältnis NPC : ECL = 70 : 30

Zu einer Lösung von 1.260 g NPC und 540 g ECL in 10.000 ml Toluol wurden bei 15°C 15 ml n-Butyllithium-Lösung (2.5 molar in Cyclohexan) gegeben. Während einer Polymerisationszeit von 60 min wurde eine maximale Temperatur von 27°C erreicht. Das Reaktionsgemisch wurde dann mit 100 ml einer Mischung aus 1 molarer Phosphorsäure/Methanol (1:1 Vol.-%) desaktiviert und das Copolymere durch Fällung in Methanol, Filtration und Trocknung isoliert.

Copolymerausbeute: 1.675 g (93 %)
rel. Viskosität $\eta_{rel}$: 4.2 (20°C, 2 gew.-%ige Lösung in Methylenchlorid)

Die anwendungstechnischen Daten sind in der Tabelle zusammengefaßt.

Vergleichsbeispiel 7

Herstellung eines Copolymeren vom Typ A - X - B mit einem Monomer-Gewichtsverhältnis NPC : ECL = 50 : 50

Zu einer Lösung von 900 g NPC und 900 g ECL in 10.000 ml Toluol wurden bei 15°C 10 ml n-Butyllithium-Lösung (2.5 molar in Cyclohexan) gegeben. Während einer Polymerisationszeit von 60 min wurde eine maximale Temperatur von 26°C erreicht. Das Reaktionsgemisch wurde dann mit 100 ml einer Mischung aus 1 molarer Phosphorsäure/Methanol (1:1 Vol.-%) desaktiviert und das Copolymere durch Fällung in Methanol, Filtration und Trocknung isoliert.

Copolymerausbeute: 1.715 g (95 %)
rel. Viskosität $\eta_{rel}$: 4.4 (20°C, 2 gew.-%ige Lösung in Methylenchlorid)

Die anwendungstechnischen Daten sind in der Tabelle zusammengefaßt.

Vergleichsbeispiel 8

Herstellung eines Copolymeren vom Typ A - X - B mit einem Monomer-Gewichtsverhältnis NPC : ECL = 10 : 90

Zu einer Lösung von 200 g NPC und 1.800 g ECL in 10.000 ml Toluol wurden bei 15°C 30 ml n-Butyllithium-Lösung (2.5 molar in Cyclohexan) gegeben. Während einer Polymerisationszeit von 60 min wurde eine maximale Temperatur von 27°C erreicht. Das Reaktionsgemisch wurde dann mit 100 ml einer Mischung aus 1 molarer Phosphorsäure/Methanol (1:1 Vol.-%) desaktiviert und das Copolymere durch Fällung in Methanol, Filtration und Trocknung isoliert.

Copolymerausbeute: 1.805 g (90 %)

rel. Viskosität $\eta_{rel}$: 4.7 (20 °C, 2 gew.-%ige Lösung in Methylenchlorid)
Die anwendungstechnischen Daten sind in der Tabelle zusammengefaßt.

Verarbeitung:

Die Copolymerpulver der Beispiele 1 bis 4 sowie der Vergleichsbeispiele 6 bis 8 wurden auf einer Mischwalze bei 120 °C zu Fellen und anschließend auf einer Presse bei 140 °C zu Platten verarbeitet. Daraus wurden die für die anwendungstechnischen Prüfungen notwendigen Prüfkörper gewonnen.

**Tabelle**

| Beispiele | Gew.-Verhältnis NPC : ECL | Zugfestigkeit (DIN 53 504) MPa | Reißdehnung (DIN 53 504) % | Shore-Härte (DIN 53 505) A / D | Wärmeformbeständigkeit VST/A/120 (DIN 53 460) °C |
|---|---|---|---|---|---|
| 1 | 80 : 20 | 24 | 310 | 96 / 62 | 96 |
| 2 | 60 : 40 | 40 | 545 | 95 / 41 | 74 |
| 3 | 40 : 60 | 34 | 820 | 90 / 44 | 52 |
| 4 | 20 : 80 | 27 | 1000 | 95 / 43 | 55 |
| **Vergleichsbeispiele** | | | | | |
| 5 | 90 : 10 | 24 | 140 | 90 / 27 | 60 |
| 6 | 70 : 30 | 14 | 265 | 73 / 20 | 43 |
| 7 | 50 : 50 | 16 | 490 | 80 / 19 | 39 |
| 8 | 10 : 90 | 26 | 645 | 93 / 37 | 44 |

## Patentansprüche

1. Blockcopolymere der Formel (I)

A - B - A (I)

aus Blöcken aus aliphatischen Polycarbonaten (A-Block) und Blöcken aus aliphatischen Lactonen (B-Block).

2. Blockcopolymere gemäß Anspruch 1, in denen Block A Polyneopentylglykolcarbonat und Block B Poly-ϵ-caprolacton ist.

3. Blockcopolymere gemäß Anspruch 1, in denen Block A Polyneopentylglykolcarbonat und Block B ein Copolymer aus Neopentylglykolcarbonat und ϵ-Caprolacton ist.

4. Verfahren zur Herstellung der Copolymeren gemäß Anspruch 1, dadurch gekennzeichnet, daß man in einer ersten Stufe ein cyclisches aliphatisches Carbonat in einem aprotischen organischen Lösungsmittel mit einer alkalimetallorganischen Verbindung polymerisiert, in einer zweiten Stufe zur polymerisationsaktiven Lösung ein aliphatisches Lacton in einem aprotischen organischen Lösungsmittel gibt und weiterpolymerisiert, in einer dritten Stufe zur polymerisationsaktiven Lösung ein cyclisches Carbonat in einem aprotischen organischen Lösungsmittel gibt, weiterpolymerisiert und anschließend die polymerisationsaktiven Zentren desaktiviert.

## Claims

1. Block copolymers of the formula (I)

A - B - A (I)

made from blocks of aliphatic polycarbonates (block A) and blocks of aliphatic lactones (block B).

2. Block copolymers according to claim 1, in which block A is polyneopentyl glycol carbonate and block B is poly-ϵ-caprolactone.

3. Block copolymers according to claim 1, in which block A is polyneopentyl glycol carbonate and block B is a copolymer of neopentyl glycol carbonate and ϵ-caprolactone.

4. Process for the production of the copolymers according to claim 1, characterised in that, in a first stage a cyclic aliphatic carbonate is polymerised with an organic alkali-metal compound in an aprotic organic solvent, in a second stage an aliphatic lactone is added to the actively polymerising solution and further polymerised, in a third stage a cyclic carbonate in an aprotic organic solvent is added to the actively polymerising solution, further polymerised and the active centres of polymerisation are then deactivated.

## Revendications

1. Copolymères séquencés de formule (I)

A - B - A (I)

formés de séquences de polycarbonates aliphatiques (séquence A) et de séquences de lactones aliphatiques (séquence B).

2. Copolymères séquencés suivant la revendication 1, dans lesquels la séquence A est un polycarbonate de néopentyl-glycol et la séquence B est une poly-ϵ-caprolactone.

3. Copolymères séquencés suivant la revendication 1, dans lesquels la séquence A est un polycarbonate de néopentyl-glycol et la séquence B est un copolymère de carbonate de néopentyl-glycol et d'ϵ-caprolactone.

4. Procédé de production des copolymères suivant la revendication 1, caractérisé en ce qu'on polymérise dans une première étape un carbonate aliphatique cyclique dans un solvant organique aprotique avec

un composé organométallique de métal alcalin, on ajoute dans une deuxième étape à la solution en activité de polymérisation une lactone aliphatique dans un solvant organique aprotique et on poursuit la polymérisation, on ajoute dans une troisième étape à la solution en activité de polymérisation un carbonate cyclique dans un solvant organique aprotique, on poursuit la polymérisation et finalement, on désactive les centres d'activité de polymérisation.